# EUROPÄISCHE PATENTSCHRIFT

(11) **EP 3 445 537 B1**
(45) Veröffentlichungstag und Bekanntmachung des Hinweises auf die Patenterteilung: **17.06.2020**
(21) Anmeldenummer: 17723759.1
(22) Anmeldetag: 19.04.2017
(51) Int. Cl.: B25J 9/16, G01N 21/88, G05B 19/418

(54) **OPTISCHE VERMESSUNG EINES VERSCHLUSSDECKELS**
OPTICAL MEASUREMENT OF A SEALING COVER
MESURE OPTIQUE D'UN COUVERCLE DE FERMETURE

(30) Priorität: 19.04.2016 DE 102016004713
(43) Veröffentlichungstag der Anmeldung: 27.02.2019
(73) Patentinhaber: Silgan Holdings Inc., Stamford, CT 06901 (US)
(72) Erfinder: HARGENS, Sebastian, 25358 Sommerland (DE)
(74) Vertreter: Leonhard, Frank Reimund
(86) Internationale Anmeldenummer: PCT/IB2017/052256
(87) Internationale Veröffentlichungsnummer: WO 2017/182968

(56) Entgegenhaltungen:
- WO-A1-2011/032847
- WO-A2-2005/008737
- DE-A1-102008 019 435
- BATCHELOR B G: "Intelligent visual control for a flexible inspection cell", PROCEEDINGS OF SPIE, SPIE, US, Bd. 1615, 1. Januar 1992 (1992-01-01), Seiten 162-171, XP008185776, ISSN: 0277-786X

## Beschreibung

Die Erfindung betrifft eine Vorrichtung und ein Verfahren zur optischen Vermessung von Objekten zur Erfassung und/oder Überprüfung von Parametern, insbesondere von einem Verschlussdeckel eines Behälters als Objekt. Dieser Deckel hat diverse, für den Verschließvorgang wichtige Parameter, die zu prüfen, zumindest aber zu erfassen sind.

Die erfindungsgemäße Vorrichtung und das erfindungsgemäße Verfahren werden bevorzugt eingesetzt, um Verschlussdeckel von Nahrungsmittelbehältern während der Fertigung stichprobenartig auf die Einhaltung von Soll-Parametern im Rahmen von erlaubten Toleranzen zu überprüfen. Bei den Verschlussdeckeln kann es sich um Twist-Off-Verschlussdeckel (Nockenverschlussdeckel) oder um Press-On-Twist-Off-Verschlussdeckel (PT-Deckel) aus bevorzugt Metall handeln.

Grundsätzlich können die erfindungsgemäße Vorrichtung und das erfindungsgemäße Verfahren jedoch auch zur optischen Vermessung von anderen Deckeln oder anderen kleinen Objekten eingesetzt werden, zum Beispiel einem Verschlussdeckel aus Kunststoff, Unterlegscheiben, Federringen, Münzen oder Münzrohlingen in Münzprägeanstalten.

Bei der Herstellung von metallischen Verschlussdeckeln von gläsernen Nahrungsmittelbehältern, wie Twist-Off- oder Press-On-Twist-Off-Verschlussdeckeln, ist die Einhaltung von Soll-Parametern im Rahmen der erlaubten Toleranzen gemäß einer jeweiligen Werksspezifikation von großer Bedeutung. Eine Nichteinhaltung der Soll-Parameter kann dazu führen, dass der Verschlussdeckel den gefüllten Nahrungsmittelbehälter nach der Anbringung nicht richtig verschließt, was eine Kontamination oder einen Verderb des Nahrungsmittels im Behälter zur Folge haben kann.

Zu überprüfende Soll-Parameter bei Twist-Off-Verschlussdeckeln sind einer oder mehrere von Anroll-Außendurchmesser und Anroll-Innendurchmesser des angerollten unteren Randes einer Schürze des Verschlussdeckels, eine Ovalität, eine Gesamthöhe, eine Tiefe eines Spiegels (Deckelspiegel als Panel) oder Buttons (Button-/Spiegeltiefe) an der Oberseite des Verschlussdeckels, eine Tiefe einer den Button oder Spiegel umgebenden Sicke (Sickentiefe), eine Höhe, eine Breite, eine Neigung und einen Innendurchmesser von Nocken (Nockenhöhe, Nockenbreite, Nockenschräge und Nockeninnendurchmesser) entlang des angerollten unteren Randes, sowie eine Stärke eines Dichtungsmaterials (Compounddicke) entlang eines inneren Umfangs eines erhöhten Dichtungswulstes des Verschlussdeckels.

Bei Press-On-Twist-Off-Verschlussdeckeln sind zu überprüfende Soll-Parameter einer oder mehrere von Anroll-Außendurchmesser und Anroll-Innendurchmesser, Gesamthöhe, Buttontiefe oder Spiegeltiefe, Sickentiefe sowie Compounddicke an zwei Stellen entlang des inneren Umfangs eines Dichtungswulstes und der Schürze des Verschlussdeckels, KronenAußendurchmesser und Curl-Außendurchmesser.

Momentan wird die Einhaltung der Soll-Parameter zumeist geprüft, indem einzelne Deckel aus dem Produktionsprozess entnommen und mit Hilfe von Messlehren oder anderen taktilen Messeinrichtungen manuell vermessen werden, um jeweilige Ist-Parameter zu ermitteln und mit den zugehörigen Soll-Parametern zu vergleichen. Allerdings ist mit derartigen Verfahren die Ermittlung sämtlicher zuvor genannter Parameter von Twist-Off- und Press-On-Twist-Off-Verschlussdeckeln sehr zeitaufwändig und mühsam, unter anderem weil dazu verschiedene Messinstrumente benutzt und von mehreren Seiten bzw. in unterschiedlichen Richtungen an die zu vermessenden Verschlussdeckel herangeführt werden müssen. Zudem sind die Prüfungsergebnisse nicht selten ungenau und von der Person des Prüfenden abhängig. Im Allgemeinen kann daher nur ein sehr geringer Prozentsatz der Verschlussdeckel aus dem Produktionsprozess auf die Einhaltung der SollAbmessungen geprüft werden. Wenn bei einem Verschlussdeckel einer Charge die Nichteinhaltung eines Soll-Parameters festgestellt wird, muss oft die gesamte Charge entsorgt werden. Außerdem lassen sich kleinere Abweichungen von Soll-Parametern häufig manuell nicht feststellen, so dass nicht rechtzeitig Gegenmaßnahmen im Produktionsprozess der Deckel ergriffen werden können. Auch die Erfassung und Speicherung der von Hand vermessenen Ist-Parameter der Verschlussdeckel ist aufwändig, so dass eine nachträgliche Rückverfolgung und Zuordnung der Ursachen von zum Beispiel Dichtigkeitsproblemen (nach der Abfüllung der Behälter) meist nicht möglich ist.

DE 10 2008 019 435 A1 veranschaulicht ein Verfahren zum berührungslosen Vermessen dreidimensionaler, komplex geformter Bauteile, bei dem ein Bauteil vom Greifer eines Roboters ergriffen und in die Erfassungsbereiche mehrerer optischen Sensoren bewegt wird, die ortsfest angeordnet sind und die das Bauteil in verschiedenen Ausrichtungen aufzeichnen oder aufnehmen, wobei die Bilder anschließend ausgewertet werden.

Ausgehend hiervon **liegt der Erfindung die Aufgabe zugrunde**, eine Vorrichtung oder ein Verfahren bereitzustellen, mit dem es automatisiert möglich ist, bei einer Vielzahl von Objekten die Einhaltung von Soll-Parametern durch Messung von zugehörigen Ist-Parametern mit konstanter und hoher Genauigkeit zu überprüfen, auch dann, wenn sich die zu messenden Ist-Parameter an verschiedenen oder entgegengesetzten Seiten oder Stellen jedes der Objekte befinden.

Zur Lösung der zuvor genannten Aufgabe werden die Objekte, insbesondere Verschlussdeckel, erfindungsgemäß auf optischem Wege automatisiert vermessen, wobei die beanspruchte Vorrichtung (Anspruch 1) einen mit mehreren Freiheitsgraden beweglichen Roboter mit einem Greifer zum Aufnehmen eines zu vermessenden Objekts, einen ersten ortsfesten optischen Sensor zur Erfassung von mindestens einem ersten Parameter des Objekts, sowie mindestens einen weiteren ortsfesten optischen Sensor zur Erfassung von mindestens einem weiteren Parameter des Objekts umfasst. Der Roboter legt das vom Greifer aufgenommene Objekt zur Erfassung des ersten Parameters auf einer Ablagefläche in einem Erfassungsbereich der ersten Sensors ab und bewegt das vom Greifer aufgenommene Objekt zur Erfassung des mindestens einen weiteren Parameters innerhalb eines Erfassungsbereichs des mindestens einen weiteren optischen Sensors.

Die Erfindung(en) erreichen es, eine große Anzahl von Objekten einzeln aus einem Produktionsprozess zu entnehmen, um nach der Vermessung diejenigen Objekte, welche die Soll-Parameter einhalten, wieder in den Produktionsprozess zurückzuführen. Diejenigen Objekte, bei denen dies nicht der Fall ist, werden der Entsorgung zugeführt.

Im Falle von wesentlichen Abweichungen der Soll-Parameter kann sofort Einfluss auf den Produktionsprozess genommen werden, zum Beispiel um diesen zur Beseitigung einer Fehlerquelle anzuhalten. Die Menge der fehlerhaften und damit zu entsorgenden Objekte wird reduziert.

Ein geringer Platzbedarf wird erreicht und trotz ungünstiger Umgebungsbedingungen, wie Wärme und Vibrationen, kann die Vorrichtung in der Umgebung der zur Fertigung der Objekte - insbesondere Deckel - dienenden Maschinen (Stanzen, Pressen) aufgestellt werden, ohne dass die Vermessung der Objekte durch die Umgebungsbedingungen beeinträchtigt wird.

Die Vorrichtung gestattet es, die Ergebnisse der Vermessung eines Objekt automatisiert einer bestimmten Charge von Objekten aus dem Produktionsprozess zuzuordnen, so dass im Falle einer späteren Beanstandung eines Objekts ein Nachweis einer ordnungsgemäßen Fertigung möglich ist.

Das erfindungsgemäße Verfahren (Anspruch 20) sieht vor, dass das Objekt von einem Greifer eines mit mehreren Freiheitsgraden sich bewegenden Roboters aufgenommen wird. Ein erster ortsfester optischer Sensor erfasst mindestens einen ersten Parameter des Objekts. Ein weiterer ortsfester optischer Sensors erfasst mindestens einen weiteren Parameter des Objekts. Das vom Greifer aufgenommene Objekt wird zur Erfassung des ersten Parameters auf einer Ablagefläche in einem Erfassungsbereich des ersten optischen Sensors abgelegt. Zur Erfassung des mindestens einen weiteren Parameters innerhalb eines Erfassungsbereichs des mindestens einen weiteren optischen Sensors wird das Objekt bewegt.

Die Handhabung des Objekts durch einen mit einem Greifer versehenen Roboter gestattet es, das zu vermessende Objekt aufzunehmen, es im Erfassungsbereich des ersten optischen Sensors auf der Ablagefläche abzulegen, es erneut von der Ablagefläche aufzunehmen, es in den Erfassungsbereich des mindestens einen weiteren optischen Sensors zu bewegen, es dort entlang eines vorbestimmten Bewegungspfades zu bewegen, z.B. um eine Achse zu drehen, um es in Bezug zum weiteren optischen Sensor in eine oder mehrere gewünschte Ausrichtungen zu bringen, und es in Abhängigkeit vom Ergebnis der Vermessung entweder in den Produktionsprozess zurückzuführen oder zu entsorgen.

Durch das Ablegen des Objekts auf der Ablagefläche zum Zwecke der Erfassung des mindestens eines ersten Parameters des Objekts mit Hilfe des ersten optischen Sensors kann außerdem ein Basis-Parameter, der zur späteren Ermittlung weiterer Parameter erforderlich ist, mit hoher Genauigkeit bestimmt werden. Dieser Basis-Parameter kann dann gemäß einer weiteren vorteilhaften Ausgestaltung der Erfindung zur Berechnung von weiteren Parametern herangezogen werden, zum Beispiel aus Messwerten, die von dem mindestens einen weiteren optischen Sensor ermittelt werden.

Die Berechnung erfolgt vorteilhaft mittels eines Rechners der Vorrichtung, der das Koordinatensystem der Ablagefläche und das Koordinatensystem des Roboters miteinander in Beziehung setzt. Der Rechner weist vorteilhaft einen Speicher und eine Anzeige auf, so dass die ermittelten Parameter angezeigt, mit den Soll-Parametern verglichen und in Verbindung mit einer Chargennummer in einer Datenbank im Speicher des Rechners gespeichert werden können.

Wenn es sich bei der Ablagefläche gemäß einer bevorzugten Ausgestaltung der Erfindung um eine zuvor genau vermessene Ablagefläche handelt, deren Koordinaten in einem vom Koordinatensystem des Roboters getrennten Koordinatensystem bekannt sind und dessen Lagebeziehung zum Koordinatensystem des Roboters ebenfalls bekannt ist, ist es möglich, den Greifer des Roboters bei der erneuten Aufnahme des Objekts von der Ablagefläche mit hoher Genauigkeit in einer gewünschten Lagebeziehung in Bezug zum Objekt zu positionieren, vorzugsweise in einer Lagebeziehung, in der sich eine Mittelachse des Greifers genau über der Mitte einer rotationssymmetrischen Fläche des Objekts bzw. im Falle eines kreisförmigen Verschlussdeckels über dessen Mitte befindet. Diese definierte Lagebeziehung zwischen dem Objekt und dem Greifer ermöglicht es wiederum, das Objekt zur weiteren Vermessung innerhalb des Erfassungsbereichs des mindestens einen weiteren optischen Sensors an eine genau definierte Stelle oder entlang eines genau definierten Bewegungspfades zu bewegen, um an einer gewünschten Stelle im Strahlengang des mindestens einen weiteren Sensors die Ermittlung des mindestens einen weiteren Parameters vorzunehmen.

Sofern es sich bei dem Objekt um ein ferromagnetisches Objekt mit einer ebenen Oberfläche handelt, umfasst der Greifer bevorzugt einen Elektromagneten, der zum Ergreifen des Objekts eingeschaltet wird und zum Abwerfen des Objekts ausgeschaltet wird. Um ein Anhaften des Objekts infolge von magnetischer Remanenz zu verhindern, ist der Elektromagnet zweckmäßig in einem Leichtmetallgehäuse untergebracht.

Bei den ermittelten Parametern handelt es sich vorzugsweise um Maße oder Abmessungen, die zweckmäßig direkt gemessen oder aus Messwerten von einem der Sensoren berechnet werden, zum Teil unter Verwendung bereits ermittelter Parameter.

Gemäß einer bevorzugten Ausgestaltung der Erfindung handelt es sich bei den zu vermessenden Objekten um Verschlussdeckel für Nahrungsmittelbehälter, vorzugsweise um Twist-Off- oder Press-On-Twist-Off-Verschlussdeckel, wobei im zuerst genannten Fall der vom ersten optischen Sensor ermittelte mindestens eine erste Parameter einen Außendurchmesser und ggf. eine Ovalität des Verschlussdeckels umfasst und der vom mindestens einen weiteren optischen Sensor ermittelte mindestens eine weitere Parameter einen Anrollinnendurchmesser, eine Höhe, eine Breite, eine Neigung und einen Innendurchmesser von Nocken entlang eines unteren Randes und/oder eine Materialstärke eines Dichtungsmaterials (Compounddicke) entlang eines inneren Umfangs des Verschlussdeckels umfasst.

Im zuletzt genannten Fall umfasst der vom ersten optischen Sensor ermittelte mindestens eine erste Parameter einen Anrollaußendurchmesser, einen Kronenaußendurchmesser und/oder einen Curl-Außendurchmesser sowie ggf. eine Ovalität des Verschlussdeckels, während der vom mindestens einen weiteren optischen Sensor ermittelte mindestens eine weitere Parameter die Materialstärke eines Dichtungsmaterials (Compounddicke) an entlang eines inneren Umfangs, bevorzugt an zwei verschiedenen Stellen der Schürze und des Dichtungswulstes und/oder einen Anrollinnendurchmesser des Verschlussdeckels umfasst.

Mit der erfindungsgemäßen Vorrichtung und dem erfindungsgemäßen Verfahren ist es weiter möglich, Objekte, wie Verschlussdeckel, welche die Soll-Parameter einhalten, automatisiert von Objekten zu trennen, welche die Soll-Parameter nicht einhalten. Dies gestattet es gemäß einer weiteren vorteilhaften Ausgestaltung der Erfindung, die ersteren direkt in den Produktionsprozess zurückzuführen und die letzteren zu entsorgen. Der Vergleich der bei der Vermessung eines Objekts erfassten Ist-Parameter mit den jeweiligen Soll-Parametern erfolgt bevorzugt noch während des Zeitraums, in dem das Objekt vom Greifer des Roboters gehalten wird, so dass es in Abhängigkeit vom Ergebnis des Vergleichs durch eine entsprechende Positionierung des Roboters entweder in eine erste Fördereinrichtung oder Rutsche zum Zurückführen in den Produktionsprozess oder in eine zweite Fördereinrichtung oder Rutsche zum Entsorgen abgeworfen werden kann.

Gemäß einer weiteren bevorzugten Ausgestaltung der Erfindung umfasst die Vorrichtung neben dem ortsfesten ersten optischen Sensor und dem mindestens einen weiteren ortsfesten optischen Sensor auch noch einen am Roboter bzw. Greifer angebrachten, zusammen mit dem Roboter beweglichen optischen Sensor, bei dem es sich vorzugsweise um eine Lasertriangulations-Sensor mit einem Laser und einem CCD/PSD-Detektor oder einer Kamera oder einer ortsauflösenden Fotodiode handelt.

Der bewegliche Sensor dient zum einen dazu, vor der Aufnahme des Objekts durch den Greifer des Roboters die Höhe und die Position des Objekts auf einer Zuführrutsche mit konvergierenden Begrenzungswänden grob zu vermessen. Dadurch soll zum einen festgestellt werden, ob es sich bei dem Objekt um ein erwartetes Objekt handelt, dessen Soll-Parameter der Vermessung zugrunde gelegt werden, oder ob der Vorrichtung versehentlich ein anderes Objekt mit völlig unterschiedlichen Parametern zugeführt wurde. Zum anderen dient die Vermessung dazu, den Greifer des Roboters bei der anschließenden Aufnahme des Objekts zumindest grob in eine gewünschte Lagebeziehung zum Objekt zu bringen, indem es zum Beispiel zur Aufnahme eines runden Verschlussdeckels mittig über dem Verschlussdeckel positioniert wird.

Zum anderen dient der bewegliche Sensor dazu, die Höhe des auf der Ablagefläche abgelegten Objekts mit hoher Genauigkeit zu vermessen und ein Höhenprofil einer von der Ablagefläche abgewandten Oberseite des Objekts zu ermitteln, indem die Entfernung zwischen dem Laser und Auftreffpunkten eines vom Laser emittierten Laserstrahls entlang eines vorgegebenen Bewegungspfades des Laserstrahls über die Oberseite des Objekts gemessen und aus der bekannten Höhe der Ablagefläche im Koordinatensystem des Roboters die Höhe der Auftreffpunkte über der Ablagefläche berechnet wird. Auf diese Weise können zusätzlich zu den bereits genannten Parametern, die von den ortsfesten optischen Sensoren ermittelt werden, weitere Parameter ermittelt werden, wie zum Beispiel bei Twist-Off- und Press-On-Twist-Off-Verschlussdeckeln die Gesamthöhe, die Tiefe eines Spiegels oder Buttons (Button-/Spiegeltiefe) in der Mitte der Oberseite des Verschlussdeckels und die Tiefe einer den Button oder Spiegel umgebenden Sicke (Sickentiefe).

Die Vermessung dieser Parameter auf der Auflagefläche ist von Vorteil, weil sich diese Parameter auf der Oberseite des Verschlussdeckels befinden, die nach der Aufnahme des Objekts durch den Roboter dem Greifer zugewandt ist und gegen eine allgemein ebene Anlagefläche des Greifers des Roboters anliegt, so dass sie für eine Vermessung nicht mehr zugänglich ist.

Eine weitere bevorzugte Ausgestaltung der Erfindung sieht vor, dass die Ablagefläche transparent ist, dass der erste optische Sensor eine auf einer Seite der Ablagefläche angeordnete Lichtquelle, eine zwischen der Lichtquelle und der Ablagefläche angeordnete telezentrische Optik und eine auf der entgegengesetzten Seite der Ablagefläche angeordnete Bilderfassungseinrichtung zur Erfassung von mindestens einem Parameter eines vom Objekt erzeugten Schattenbildes umfasst. Durch Auswertung des von der Bilderzeugungseinrichtung erfassten Schattenbildes können vor allem die äußeren Abmessungen des auf der Ablagefläche liegenden Objekts mit hoher Genauigkeit ermittelt werden und damit bei Twist-Off-Verschlussdeckeln der Anrollaußendurchmesser, der später vom Rechner zur Berechnung von weiteren Parametern aus Messwerten herangezogen werden kann, die von dem mindestens einen weiteren optischen Sensor ermittelt werden.

Der mindestens eine weitere optische Sensor dient bevorzugt zur Ermittlung von Parametern an einer der Ablagefläche zugewandten und vom Greifer des Roboters abgewandten Unter- oder Innenseite des zu vermessenden Objekts. Wenn es sich bei dem Objekt um einen Twist-Off- oder Press-On-Twist-Off-Verschlussdeckel handelt, umfasst die mindestens eine weitere optische Sensor zweckmäßig einen ersten weiteren Sensor, der als Lasertriangulations-Sensor ausgebildet ist. Dieser umfasst zweckmäßig einen Laserprojektor und einen ortsauflösenden Detektor und dient bei der Vermessung von Twist-Off-Verschlussdeckeln zur Ermittlung der Materialstärke des Dichtungsmaterials (Compounddicke) entlang eines inneren Umfangs des Verschlussdeckels. Zur Vermessung wird der Verschlussdeckel vom Roboter innerhalb des Erfassungsbereichs des Sensors um 360°um die Mittelachse des Greifers gedreht. Während der Drehung wird durch Lasertriangulation die Entfernung zwischen dem Laserprojektor und dem Auftreffpunkt eines während der Drehung vom Laserprojektor emittierten Laserstrahls in einem definierten Abstand vom äußeren Umfang des Verschlussdeckels gemessen und daraus entlang des inneren Umfangs desselben die Compounddicke ermittelt.

Bei der Vermessung von Press-On-Twist-Off-Verschlussdeckeln wird ebenfalls die Compounddicke entlang des inneren Umfangs des zu vermessenden Verschlussdeckels ermittelt, jedoch im Unterschied zu Twist-Off-Verschlussdeckeln an zwei verschiedenen Stellen. Darüber hinaus dient der Lasertriangulations-Sensor bei diesen Deckeln auch zur Ermittlung des Anrollinnendurchmessers.

Dort, wo das Objekt ein Twist-Off-Verschlussdeckel ist, umfasst der mindestens eine weitere ortsfeste Sensor einen zweiten weiteren Sensor, der zweckmäßig einen Linienlaser und eine Kamera umfasst und zur Ermittlung der Höhe und Neigung der Nocken entlang des unteren Randes des Verschlussdeckels dient. Zur Vermessung wird der vom Roboter gehaltene Twist-Off-Verschlussdeckel um die Mittelachse des Greifers gedreht, während eine vom Linienlaser emittierte Laserlinie in einer zur Mittelachse geneigten Ebene auf den inneren Umfang des Verschlussdeckels gerichtet und von dort zur Kamera reflektiert wird, die das reflektierte Bild des Linienlasers aufnimmt. Dabei schließt die Ebene der vom Linienlaser emittierten Laserlinie mit der Ebene der zur Kamera reflektierten Laserlinie zweckmäßig einen spitzen Winkel von vorzugsweise etwa 35 bis 40° ein. Der zweite weitere Sensor gestattet es, mit der Kamera entlang des Umfangs des Verschlussdeckels eine Folge von Bildern aufzunehmen, aus denen sich die Höhe und Neigung der Nocken (Nockenschräge) ableiten lässt.

Zur Vermessung von Twist-Off-Verschlussdeckeln umfasst der mindestens eine weitere ortsfeste Sensor vorteilhaft noch einen dritten weiteren Sensor, der bevorzugt eine Lichtquelle, eine Kamera und eine Bildverarbeitungseinrichtung umfasst. Die Lichtquelle ist zweckmäßig als Punktlichtquelle ausgebildet, am abgebogenen Ende eines länglichen Halters angeordnet und zur Kamera hin gerichtet, so dass die Kamera während einer Drehung des Verschlussdeckels um die Mittelachse des Greifers in axialer Richtung des Verschlussdeckels ein Schattenbild der Nocken am unteren Rand desselben erzeugen kann. Aus diesem Schattenbild lassen sich dann unter Verwendung des zuvor ermittelten Anrollaußendurchmessers die Breite der Nocken (Nockenbreite), ein Innendurchmesser des Deckels im Bereich der Nocken (Nockeninnendurchmesser) und der Anrollinnendurchmesser ermitteln.

Bei der Vermessung von Press-On-Twist-Off-Verschlussdeckeln werden vorteilhaft mit Hilfe eines vierten weiteren Sensors der Kronenaußendurchmesser und der Curl-Außendurchmesser durch Erzeugung und Auswertung von Schattenbildern während einer Drehung des Verschlussdeckels um die Mittelachse des Greifers ermittelt. Der vierte weitere Sensor umfasst zu diesem Zweck ebenfalls eine Lichtquelle, eine Kamera und eine Bildverarbeitungseinrichtung.

Um es zu ermöglichen, die erfindungsgemäße Vorrichtung in der Nähe eines Produktionsprozesses aufzustellen, wie zum Beispiel eines Umformprozesses zur Herstellung metallischer Twist-Off-oder Press-On-Twist-Off-Verschlussdeckel, ohne dass ungünstige Umgebungsbedingungen, wie Wärme und Vibrationen, die Messungen beeinträchtigen, sind bevorzugt der Roboter sowie sämtliche Sensoren innerhalb eines klimatisierten Gehäuses untergebracht, das auf aktiven Schwingungsdämpfern schwingungsfrei abgestützt ist. Die zu vermessenden Verschlussdeckel werden einzeln aus dem Produktionsprozess in das Gehäuse zugeführt, dort vermessen und dann in Abhängigkeit vom Messergebnis entweder in den Produktionsprozess zurückgeführt, wenn alle gemessenen Ist-Parameter den Soll-Parametern entsprechen, oder entsorgt, wenn einer oder mehrere gemessene Ist-Parameter den zugehörigen Soll-Parametern nicht entsprechen.

Im zuletzt genannten Fall kann der Produktionsprozess gestoppt werden, bevor eine große Anzahl von fehlerhaften Verschlussdeckeln gefertigt worden ist.

Im Folgenden wird die Erfindung anhand von in der Zeichnung dargestellten Ausführungsbeispielen näher erläutert und ergänzt.
Fig. 1 zeigt eine teilweise geschnittene Seitenansicht eines zu vermessenden Twist-Off-Verschlussdeckels mit einem Teil der bei der Vermessung zu ermittelnden Ist-Parametern oder Messwerten;
Fig. 2 zeigt eine Unterseitenansicht des Verschlussdeckels mit den übrigen der zu ermittelnden Ist-Parameter;
Fig. 3 zeigt eine teilweise geschnittene Seitenansicht eines zu vermessenden Press-On-Twist-Off-Verschlussdeckels mit den bei der Vermessung zu ermittelnden Ist-Messparametern;
Fig. 4 zeigt eine vergrößerte Ansicht des Ausschnitts IV in Fig. 3;
Fig. 5 zeigt eine vereinfachte Seitenansicht einer erfindungsgemäßen Vorrichtung;
Fig. 6 zeigt eine vergrößerte Seitenansicht eines Roboters der Vorrichtung;
Fig. 7 zeigt eine vereinfachte Schnittansicht entlang der Linie Vll-Vll der Fig. 5;
Fig. 8 zeigt eine Oberseitenansicht einer Ablagefläche eines ersten ortsfesten Sensors und eines auf der Ablagefläche abgelegten Verschlussdeckels bei der Vermessung mit einem beweglichen, vom Roboter getragenen Lasertriangulationssensor;
Fig. 9 zeigt eine vergrößerte Seitenansicht der Ablagefläche, des Verschlussdeckels sowie von Teilen einer telezentrischen Optik des ersten ortsfesten Sensors;
Fig. 10 zeigt eine schematische Ansicht der Funktionsweise des vom Roboter getragenen beweglichen Lasertriangulationssensors;
Fig. 11 zeigt eine schematische Ansicht eines ersten weiteren optischen Sensors bei der Vermessung eines vom Roboter im Erfassungsbereich des Sensors bewegten Verschlussdeckels;
Fig. 12 zeigt eine schematische Ansicht eines zweiten weiteren Sensors bei der Vermessung des vom Roboter im Erfassungsbereich dieses Sensors bewegten Verschlussdeckels;
Fig. 13a und 13b zeigen zwei vom zweiten weiteren Sensor aufgenommene Bilder;
Fig. 14 zeigt eine schematische Ansicht eines dritten weiteren Sensors bei der Vermessung des vom Roboter im Erfassungsbereich dieses Sensors bewegten Verschlussdeckels.

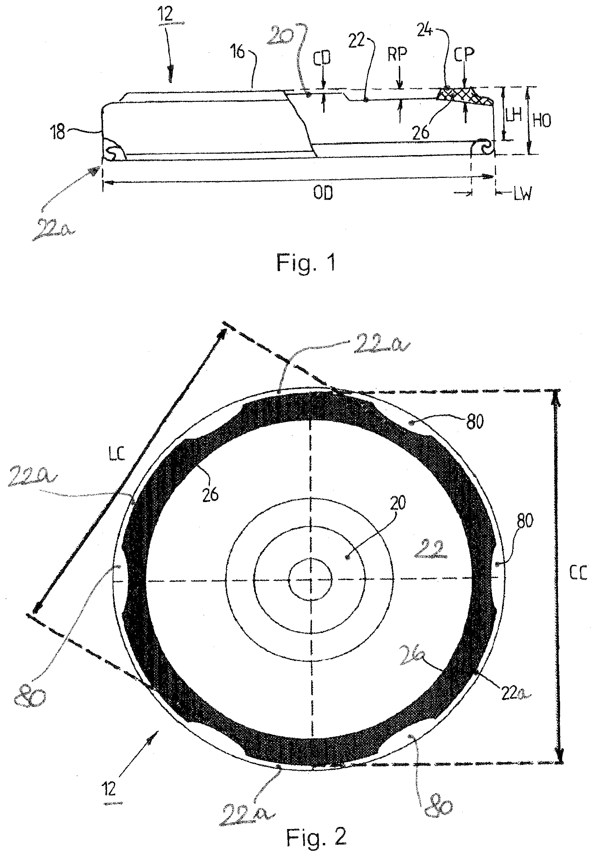

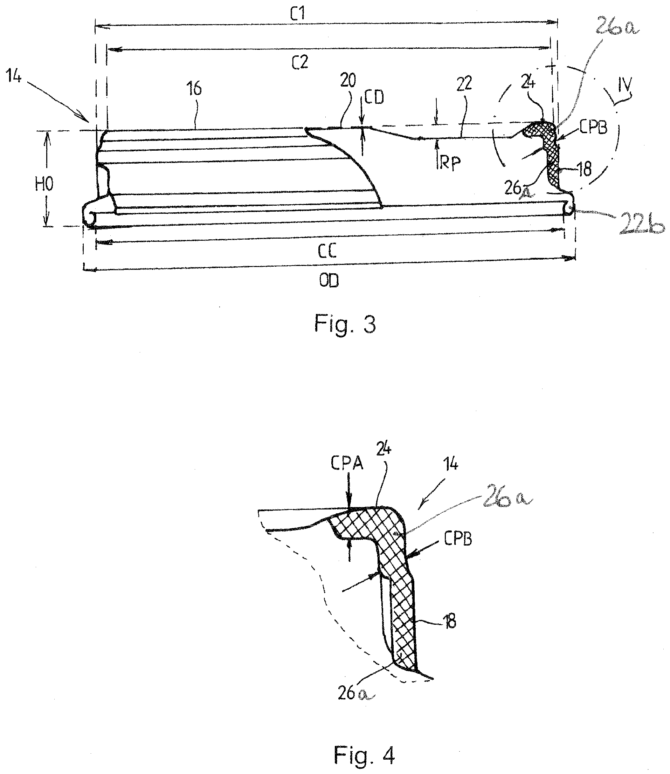

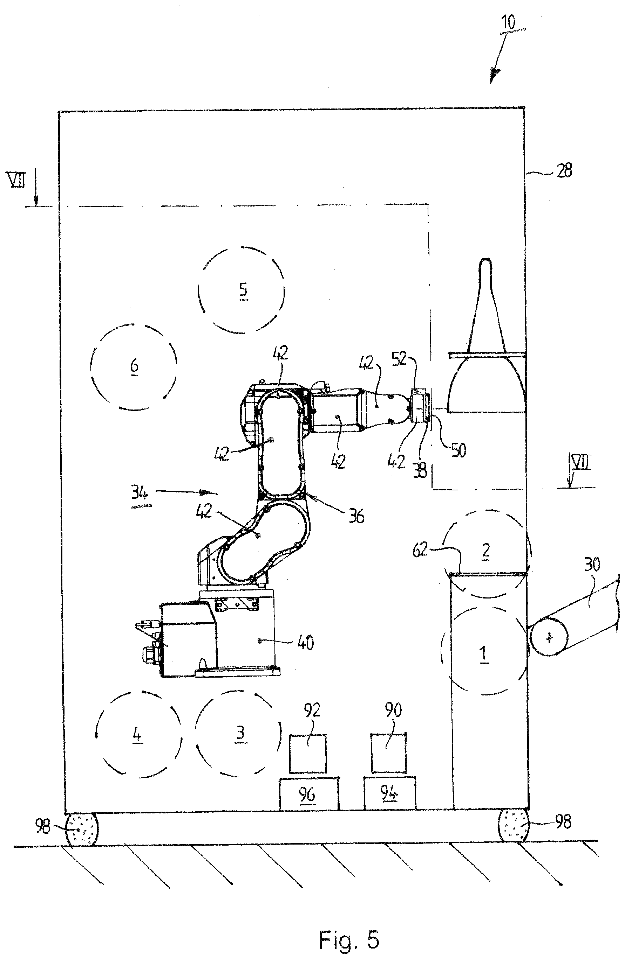

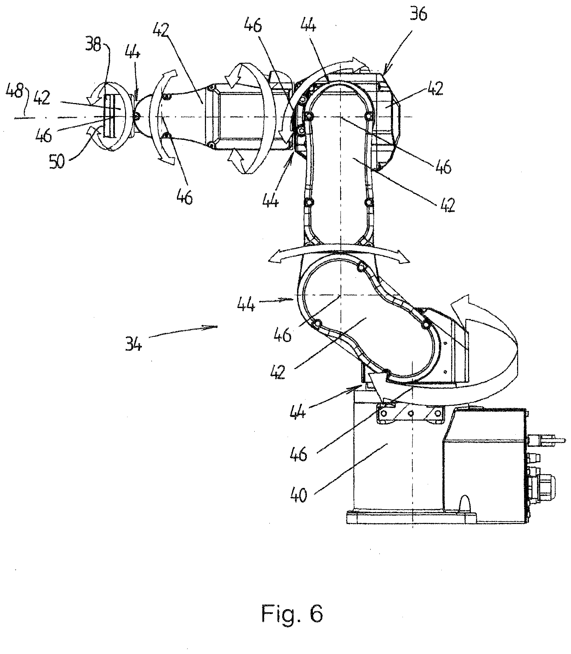

Die in den Figuren 5 und 6 vereinfacht dargestellte Vorrichtung 10 dient zur optischen Vermessung von ferromagnetischen Verschlussdeckeln, insbesondere zur Vermessung von metallischen Twist-Off-Verschlussdeckeln 12, wie in den Figuren 1 und 2 dargestellt, oder von metallischen Press-On-Twist-Off-Verschlussdeckeln 14, wie in den Figuren 3 und 4 dargestellt, die beide zum Verschließen von z. B. gläsernen Nahrungsmittelbhältern (nicht dargestellt) dienen.

Die Vorrichtung 10 wird nahe bei einer Fertigungsanlage oder Fertigungsstraße aufgestellt, in der die Verschlussdeckel produziert werden. Dazu werden Ronden aus Platten gestanzt und durch umformen in die Gestalt eines Deckels gebracht, der mehrere Nocken 80 haben kann, oder in die ein Compound als Gewindevermittler an der umgeformten Schürze eingebracht wird (PT Verschluss). Zum Verschließen haben die Behälter am oberen Randbereich ein Gewinde oder gestaffelte Gewindesegmente.

Grundsätzlich kann die Vorrichtung 10 auch zur optischen Vermessung von anderen Objekten eingesetzt werden, vorzugsweise von flachen scheiben- oder ringförmigen Objekten, wie frisch geprägten Münzen, Unterlegscheiben, Federringen oder Tellerfedern.

Der in Fig. 1 und 2 dargestellte Twist-Off-Verschlussdeckel 12 besteht aus verzinntem ferromagnetischem Feinblech und weist einen allgemein scheibenförmigen Spiegel 16 und eine nach unten über den Spiegel 16 überstehende Schürze 18 mit einem nach innen gerollten unteren Rand 22a auf. In der Mitte des Spiegels 16 befindet sich ein Button 20, der bei Vakuumbehältern etwas nach unten gezogen wird und die Dichtigkeit anzeigt. Der Button 20 ist von einer Vertiefung 22 und einer ringförmigen Erhebung 24 umgeben. An der Innen- oder Unterseite der Erhebung 24 ist ein nachgiebiges Dichtungsmaterial (Compound) 26 eingelegt oder angeformt.

Am unteren Rand der Schürze sind beabstandete Nocken 80 angeformt. Ein Dichtungsring 26 ist umlaufend in die Sicke 24 eingelegt, der beim Verschliessen des gefüllten Gefäßes, z. B. mit Nahrungsmittel, an dessen Rand oben abdichtet.

Bei der Vermessung des Verschlussdeckels 12 werden auf optischem Weg die in Fig. 1 und 2 dargestellten Parameter Anroll-Außendurchmesser OD, Anroll-Innendurchmesser CC, Gesamthöhe H0, Sickentiefe RP, Button-/Spiegeltiefe CD, Compounddicke CP, Nockenhöhe LH, Nockenbreite LW, Nockenschräge LS und Nockeninnendurchmesser LC ermittelt.

Der in Fig. 3 und 4 dargestellte Press-On-Twist-Off-Verschlussdeckel 14 besteht ebenfalls aus verzinntem ferromagnetischem Feinblech und weist einen allgemein scheibenförmigen Spiegel 16 und eine nach unten über den Spiegel 16 überstehende Schürze 18 mit einem nach innen gerollten unteren Rand 22b auf, die jedoch eine etwas andere Form als beim Verschlussdeckel 12 besitzen. In der Mitte des Spiegels 16 befindet sich ein Button 20, der von einer Vertiefung 22 und einer ringförmigen Erhebung 24 umgeben ist. An der Unter- oder Innenseite der Erhebung 24 und an der Innenseite eines oberen Abschnitts der Schürze 18 ist ein nachgiebiges Dichtungsmaterial (Compound) 26a angeformt.

Bei der Vermessung dieses Verschlussdeckels 14 werden ebenfalls auf optischem Weg die in Fig. 3 und 4 dargestellten, folgenden Parameter Anroll-Außendurchmesser OD, Anroll-Innendurchmesser CC, Gesamthöhe H0, Sickentiefe RP, Button-/Spiegeltiefe CD, Kronenaußendurchmesser C1, Curl-Außendurchmesser C2, sowie Compounddicken CPA und CPB ermittelt.

Die vorgenannten Ist-Parameter werden anschließend in einem Rechner (nicht dargestellt) der Vorrichtung 10 mit entsprechenden vorgegebenen gespeicherten Soll-Parametern derselben Verschlussdeckel 12, 14 verglichen. Die Ist-Parameter und die Soll-Parameter werden auf einem Display (nicht dargestellt) der Vorrichtung 10 angezeigt. Wenn eventuelle Abweichungen innerhalb von vorgegebenen Toleranzen liegen, werden die Verschlussdeckel 12, 14 in den Produktionsprozess zurückgeführt. Wenn die Abweichungen jedoch systematisch außerhalb der vorgegebenen Toleranzen liegen, werden die Verschlussdeckel 12, 14 entsorgt. In diesem Fall wird auch der Produktionsprozess unterbrochen, um die Ursache der Abweichungen zu ermitteln und abzustellen.

Wie am besten in Fig. 5 und 6 dargestellt, weist die Vorrichtung 10 ein geschlossenes klimatisiertes Gehäuse 28 auf, in dem die Vermessung vorgenommen wird und in das die Verschlussdeckel 12, 14 über einen Zuführförderer 30 und eine Zuführrutsche 32 zugeführt werden. Im Gehäuse 28 werden die Verschlussdeckel 12, 14 durch konvergierende Begrenzungswände 34 der Zuführrutsche in Bezug zu einer vertikalen Mittelebene der Zuführrutsche 32 zentriert.

Innerhalb des Gehäuses 28 befindet sich ein Roboter 34 mit einem Roboterarm 36, an dessen freiem Ende ein Greifer 38 angebracht ist. Mit dem Greifer 38 lässt sich ein Verschlussdeckel 12, 14 an einer ersten Messstelle 1 von der Zuführrutsche 32 aufnehmen und im Inneren des Gehäuses 28 im Bewegungsbereich des Roboterarms 36 zu verschiedenen weiteren Messstellen 2, 3, 4, 5 und 6 bewegen, an denen jeweils unterschiedliche Ist-Parameter ermittelt oder zur Ermittlung der Ist-Parameter erforderliche Messwerte bestimmt werden. Die einzelnen Messstellen 1, 2, 3, 4, 5 und 6 sind in Fig. 5 und 6 schematisch als Kreise in unterbrochenen Linien dargestellt.

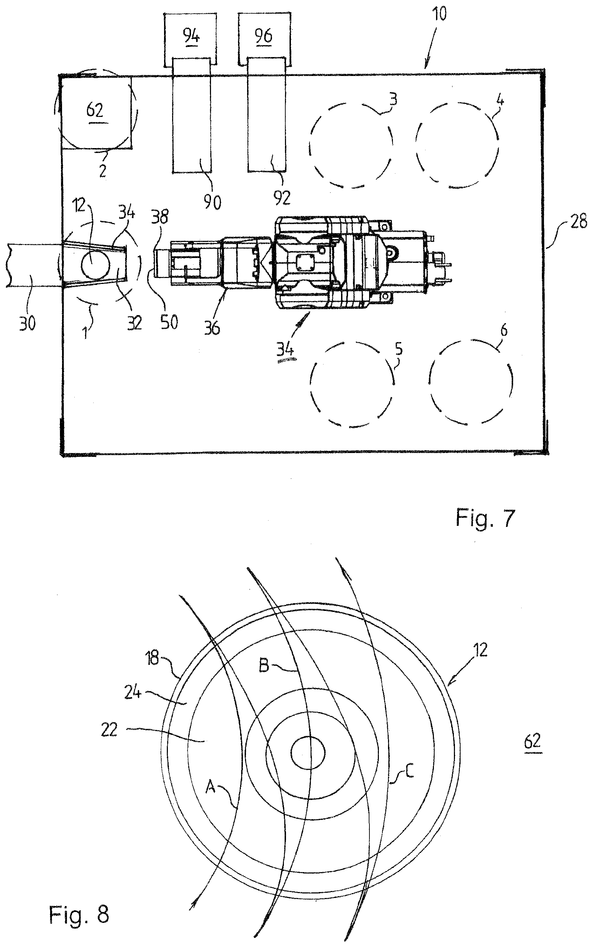

Wie am besten in Fig. 5 und 7 dargestellt, weist der Roboter 34 einen im Gehäuse 28 montierten Sockel 40 auf, der den sechsachsigen Roboterarm 36 mit insgesamt sechs Gliedern 42 trägt. Zwischen dem Sockel 40 und dem ersten Glied 42 sowie zwischen benachbarten Gliedern 42 des Roboterarms 36 sind steuerbare motorisch angetriebene Drehgelenke 44 angeordnet, mit denen jeweils das zum freien Ende des Roboterarms 36 benachbarte Glied in Bezug zu dem Sockel 40 benachbarten Glied um die Drehachse 46 des Drehgelenks 44 drehbar ist. Der am Ende des letzten Glieds 42 montierte Greifer 36 ist im Drehgelenk 44 zwischen dem letzten und vorletzten Glied 42 um die Mittelachse 48 des letzten Glieds 42 drehbar. Die Glieder 42 sind in einem Koordinatensystem des Roboters 34 gesteuert beweglich, um den Greifer 38 innerhalb der Reichweite des Roboterarms 36 an eine gewünschte Stelle zu verfahren und in eine gewünschte Ausrichtung zu bringen.

Der Greifer 38 umfasst einen in einem Leichtmetallgehäuse untergebrachten Elektromagneten (nicht sichtbar), der am freien Ende des Roboterarms 36 in Verlängerung des letzten Gliedes 42 montiert ist. Das Gehäuse weist eine allgemein ebene Anlagefläche 50 für die ebene Oberseite der ringförmigen Erhebung 24 des Verschlussdeckels 12, 14 auf. Zum Aufnehmen eines Verschlussdeckels 12, 14 wird die Anlagefläche 50 an den Verschlussdeckel 12, 14 angenähert und dann der Elektromagnet eingeschaltet, um den Verschlussdeckel 12, 14 gegen die Anlagefläche 50 zu ziehen und gegen diese anliegend unbeweglich festzuhalten. Die Anlagefläche weist vorzugsweise eine gewisse Oberflächenrauigkeit oder Oberflächenstruktur auf, um ein Anhaften der Verschlussdeckel nach dem Abschalten des Elektromagneten zu verhindern.

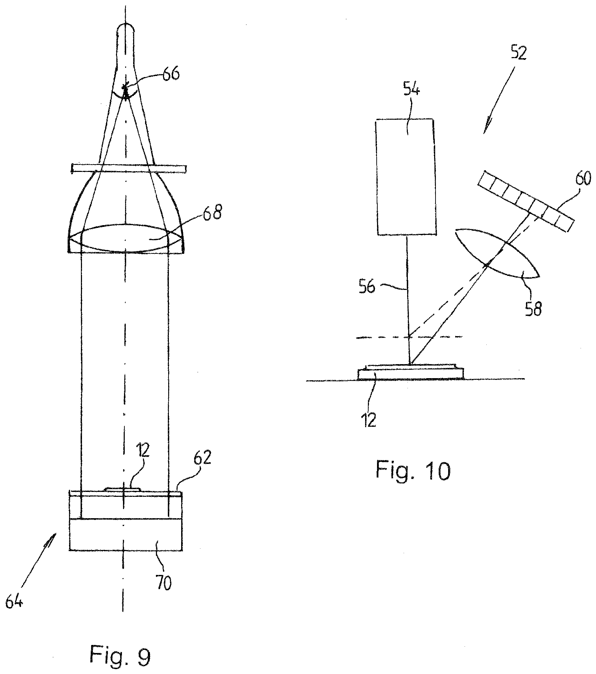

Neben dem Greifer 38 ist am letzten Glied 42 des Roboterarms 36 ein Lasertriangulations-Sensor 52 (Fig. 5) angebracht, der zusammen mit dem letzten Glied 42 des Roboterarms 36 beweglich ist. Wie in Fig. 10 dargestellt, umfasst der Sensor 52 einen Laserprojektor 54, der einen Laserstrahl 56 emittiert, ein Objektiv 58 und einen CCD/PSD-Detektor 60. Zur Messung der Entfernung eines Objekts, zum Beispiel eines zu vermessenden Verschlussdeckels 12 vom Laserprojektor 54 wird der Laserstrahl 56 auf das Objekt 12 fokussiert und der Auftreffpunkt mit dem CCD/PSD-Detektor 60 beobachtet. Wenn sich die Entfernung des Objekts 12 vom Laserprojektor 54 verändert, verändert sich auch der Winkel, unter dem der Laserstrahl 56 vom Auftreffpunkt zum Objektiv 58 und zum CCD/PSD-Detektor 60 reflektiert wird, und damit auch die Position des Bildes des Auftreffpunkts auf dem CCD/PSD-Detektor 60 hinter dem Objektiv 58, wie in Fig. 10 durch unterbrochene Linien angezeigt. Aus der Positionsänderung bzw. nach einer Eichung aus der Position des Auftreffpunkts auf dem CCD/PSD-Detektor 60 kann mit Hilfe von Winkelfunktionen die Entfernung zwischen dem Laserprojektor 54 und dem Objekt 12 bzw. dem Auftreffpunkt des Laserstrahls 56 auf dem Objekt 12 berechnet werden. An Stelle des CCD/PSD-Detektors 60 kann der Sensor 52 auch eine Kamera oder eine ortsauflösende Fotodiode enthalten.

Mit dem Lasertriangulations-Sensor 52 wird ein in das Gehäuse 28 der Vorrichtung 10 zugeführter, auf der Zuführrutsche 32 zentrierter Verschlussdeckel 12 an der Messstelle 1 grob vermessen, wobei als Parameter die Höhe und der Durchmesser grob ermittelt werden. Dadurch soll ausgeschlossen werden, dass ein Verschlussdeckel 12 mit anderen Parametern als den Soll-Parametern vermessen wird. Die an der Messstelle 1 ermittelten Parameter dienen anschließend dazu, den Greifer 38 vor der Aufnahme des Verschlussdeckels 12 ungefähr mittig über diesem zu positionieren, so dass die Mittelachse des Verschlussdeckels 12 etwa mit der Mittelachse 48 des Greifers 38 übereinstimmt.

Nach der Grobvermessung wird der Verschlussdeckel 12 mit dem Greifer 38 aufgenommen und zur Messstelle 2 transportiert, wo er auf einer ebenen horizontalen Ablagefläche 62 aus Glas abgelegt wird. Die Ablagefläche 62 ist in Bezug zu einem Koordinatensystem des Roboters 34 in allen drei Raumrichtungen genau vermessen, so dass sich der Roboter 34 auf einen gemeinsamen Koordinaten-Nullpunkt koordinieren kann. Dadurch kann in allen drei Raumrichtungen eine genaue Koordinaten-Beziehung zwischen der Anlagefläche 50 des Greifers 38 und der Ablagefläche 62 hergestellt werden.

An der Messstelle 2 befindet sich ein erster ortsfester optischer Sensor 64, der zusammen mit dem Rechner den Anrollaußendurchmesser OD und die Ovalität des Deckels 12 ermittelt. Wie am besten in Fig. 9 dargestellt, umfasst der Sensor 64 eine oberhalb von der Ablagefläche 62 angeordnete Lichtquelle 66 und eine zwischen der Lichtquelle 66 und der Ablagefläche 62 angeordnete telezentrische Optik 68 (nur teilweise dargestellt), mit der das Licht der Lichtquelle 66 parallel und senkrecht zur Auflagefläche 62 ausgerichtet wird. Unterhalb von der Ablagefläche 62 befindet sich eine Bilderfassungseinrichtung 70 zur Erfassung eines Schattenbildes des Verschlussdeckels 12. Das Schattenbild wird vom Rechner ausgewertet, wobei zur Ermittlung des Anrollaußendurchmessers OD ein mittlerer Durchmesser des kreisförmigen Schattenbildes berechnet und zur Ermittlung der Ovalität die maximalen Abweichungen der berechneten Durchmesser vom mittleren Durchmesser ermittelt werden. Das

Anschließend werden mit dem Lasertriangulations-Sensor 52 die Gesamthöhe H0, die Sickentiefe RP und die Button-/Spiegeltiefe CD des auf der Ablagefläche 62 abgelegten Verschlussdeckels 12 ermittelt, indem der Sensor 52 durch entsprechende Ansteuerung des Roboterarms 36 in einer zur Ablagefläche 62 parallelen horizontalen Ebene entlang von konzentrischen Bewegungspfaden A, B, C über den Verschlussdeckel 12 hinwegbewegt wird, wie in Fig. 8 schematisch dargestellt, und an einer Vielzahl von Messpunkten die Entfernung zwischen dem Laserprojektor 54 und der Oberseite des Deckels 12 gemessen wird. Da die Höhe der Ablagefläche 62 im Koordinatensystem des Roboters 34 bekannt ist, können aus der gemessenen Entfernung und den Abmessungen des Roboters 34 die Gesamthöhe HO und aus dieser wiederum die Sickentiefe RP und die Buttontiefe oder Spiegeltiefe CD berechnet werden.

Danach wird der Verschlussdeckel 12 mit dem Greifer 38 wieder von der Ablagefläche 62 aufgenommen, nachdem zuvor die Mittelachse 48 des Greifers 38 mit einer Toleranz von weniger als 30 µm über der Mitte des Verschlussdeckels 12 positioniert worden ist, so dass der vom Greifer 38 aufgenommene Deckel 12 bei der weiteren Vermessung exakt um seine Mitte gedreht wird.

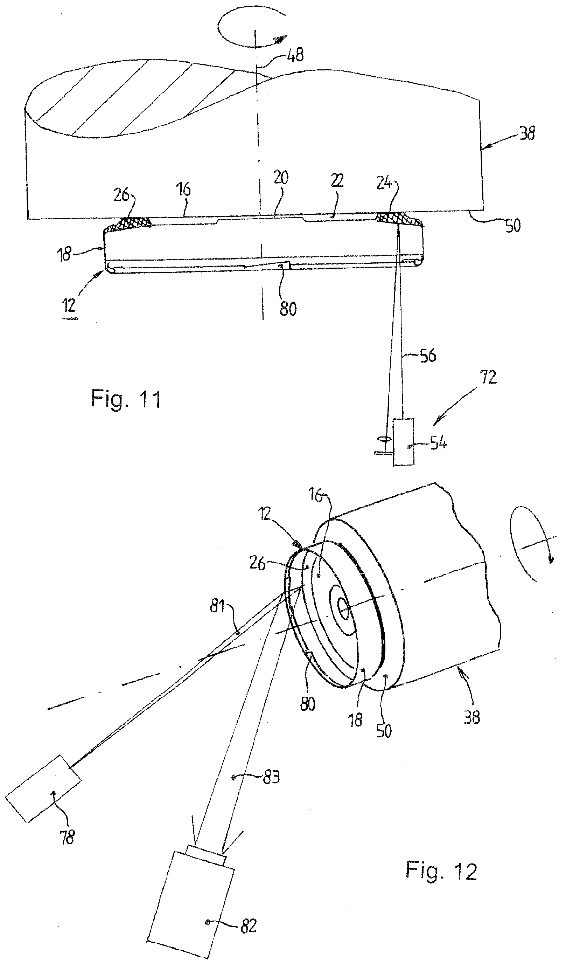

Anschließend wird der Deckel 12 vom Roboter 34 zur Messstelle 3 bewegt, wo mittels eines ersten weiteren optischen Sensors 72 (Fig. 11) mit der Compounddicke CD ein Parameter an der vom Greifer 38 abgewandten Unter- oder Innenseite des Deckels 12 ermittelt wird. Bei dem Sensor 72 handelt es sich um einen ortsfesten Lasertriangulations-Sensor, dessen Aufbau und Funktionsweise denjenigen des zuvor beschriebenen Sensors 52 entsprechen. Der vom Laserprojektor 54 emittierte Laserstrahl 56 liegt jedoch in einem blauen Wellenlängenbereich, da rotes Licht vom Dichtungsmaterial 26 stark absorbiert wird.

Bei der Vermessung von Twist-Off-Verschlussdeckeln 12 wird der Laserstrahl 56 in einem konstanten Abstand von 5,6 mm vom äußeren Umfang der Schürze 18 von unten her auf das Dichtungsmaterial 26 gerichtet, während der Deckel 12 um die Mittelachse 48 des Greifers 38 und damit um seine Mitte gedreht wird, wie in Fig. 11 dargestellt. Da dem Rechner der Vorrichtung 10 sowohl die Position des Laserprojektors 54 und die Position des Greifers 38 im Koordinatensystem des Roboters 34 bekannt sind, kann der Rechner aus den während der Drehung gemessenen Entfernungen zwischen dem Laserprojektor 54 und dem Auftreffpunkt des Laserstrahls 56 auf das Dichtungsmaterial 26 unter Nutzung der zuvor ermittelten Höhe H0 die Compounddicke CP entlang des inneren Umfangs der ringförmigen Erhebung 24 mit hoher Genauigkeit ermitteln.

Bei der Vermessung von Press-On-Twist-Off-Verschlussdeckeln 14 wird der Laserstrahl 56 an zwei Stellen von unten und schräg von innen her auf das Dichtungsmaterial 24 gerichtet, um in entsprechender Weise an diesen Stellen die Compounddicke CPA und CPB zu ermitteln, wie am besten in Fig. 4 dargestellt, während der Deckel 12 um die Mittelachse 48 des Greifers 38 gedreht wird. Darüber hinaus dient der Sensor 72 bei der Vermessung von Press-On-Twist-Off-Verschlussdeckeln 14 auch zur Ermittlung des Anrollinnendurchmessers CC. Dazu wird der Laserstahl 56 vom Laserprojektor 54 schräg von innen her auf den unteren Rand der Schürze 18 gerichtet und während der Drehung des Deckels 14 um die Mittelachse 48 des Greifers 38 die Entfernungen zwischen dem Laserprojektor 54 und dem Auftreffpunkt des Laserstrahls 56 auf den unteren Rand gemessen. Aus den Messwerten und aus den bekannten Positionen des Laserprojektors 54 und des Greifers 38 im Koordinatensystem des Roboters 34 wird danach vom Rechner der Anrollinnendurchmessers CC ermittelt.

Wenn es sich bei dem Verschlussdeckel 12, 14 um einen Twist-Off-Deckel 12 handelt, wird dieser anschließend vom Roboter 34 zuerst zur Messstelle 4 und dann zur Messstelle 5 bewegt, während er zur Messstelle 6 bewegt wird, wenn es sich um einen Press-On-Twist-Off-Deckel 14 handelt. An allen drei Messstellen 4, 5, 6 befindet sich jeweils ein weiterer ortsfester optischer Sensor, von denen in der Zeichnung nur die Sensoren 74, 76 an den Messstellen 4 und 5 dargestellt sind. An allen drei Messstellen 4, 5, 6 umfassen die Sensoren 74, 76 jeweils eine Lichtquelle und eine Bilderfassungseinheit, mit der während einer Drehung des Verschlussdeckels 12, 14 um die Mittelachse 48 des Greifers 38 sukzessive Schattenbilder von Teilen des Verschlussdeckels 12, 14 entlang von dessen Umfang aufgenommen und dann vom Rechner der Vorrichtung 10 ausgewertet werden.

An der Messstelle 4 werden die Nockenhöhe LH und die Nockenschräge LS von Nocken 80 am unteren Rand der Schürze 18 von Twist-Off-Deckeln 12 ermittelt. Bei dem an der Messstelle 4 angeordneten zweiten weiteren Sensor 74 ist die Lichtquelle ein Laserprojektor 78, der einen Fächer 81 von Laserstrahlen emittiert, deren Auftreffpunkte auf einer ebenen Oberfläche eine gerade Linie bilden. Der Laserprojektor 78 ist dabei so ausgerichtet, dass das fächerförmige Laserlicht entlang einer zur Ebene des Spiegels 16 des Deckels 12 senkrechten Linie auf den inneren Umfang der Schürze 18 und die Nocken 80 auftrifft und von dort zu einer Kamera 82 reflektiert wird, welche als Bilderfassungseinheit dient. Die Ebene des Fächers 81 der vom Laserprojektor 78 emittierten Laserstrahlen und die Ebene des Fächers 83 der von der Schürze 18 reflektierten und von der Kamera 82 erfassten Laserstrahlen schließen miteinander einen spitzen Winkel von 35 bis 40° ein, wie in Fig. 12 dargestellt. Während der Vermessung werden der Greifer 38 und der vom Greifer 38 gehaltene Verschlussdeckel 12 um die Mittelachse 48 gedreht, die anders als in Fig. 12 dargestellt senkrecht zur Ebene des Fächers 81 der vom Laserprojektor 78 emittierten Laserstrahlen ausgerichtet ist.

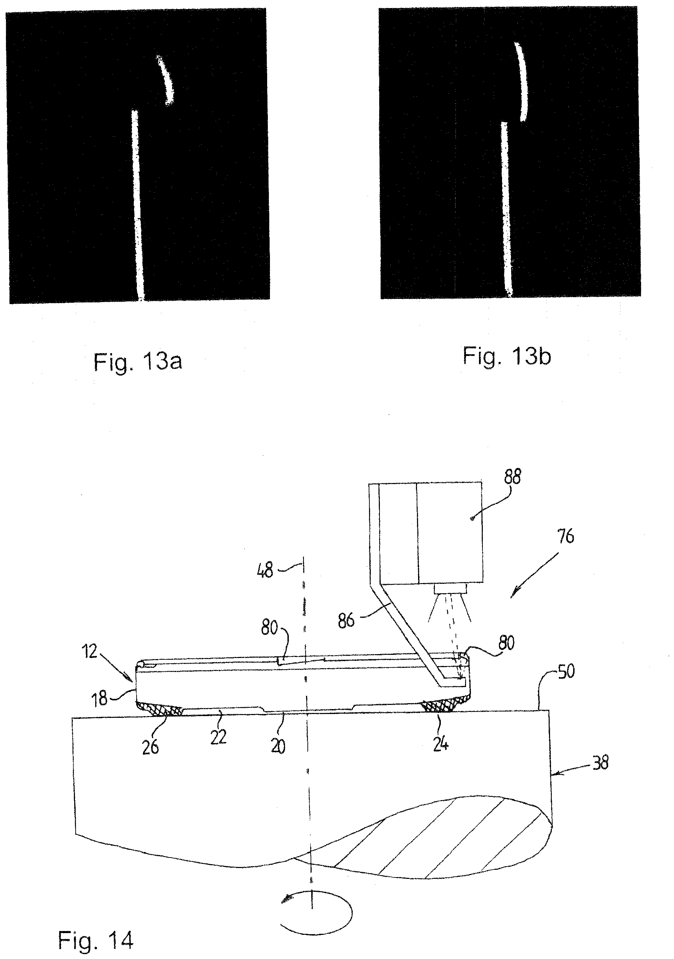

Die Kamera 82 nimmt während der Drehung des Deckels 12 um die Mittachse 48 des Greifers 38 das vom inneren Umfang der Schürze 18 zur Kamera 82 hin reflektierte Laserlicht auf und erzeugt daraus einzelne Bilder, von denen zwei in Fig. 13a und 13b dargestellt sind. Durch eine rechnerische Aneinanderreihung bzw. Überlagerung der in Umfangsrichtung des Deckels 12 von der Kamera 82 nacheinander aufgenommenen Bilder und durch Auswertung des dabei erzeugten Gesamtbildes unter Einrechnung der zuvor ermittelten Höhe HO können die Nockenhöhe LH und die Nockenschräge LS mit hoher Genauigkeit ermittelt werden. Wie man aus den Figuren 13a und 13b entnehmen kann, lässt sich die Nockenhöhe LH zum Beispiel aus der im Bereich der Nocken 80 gemessenen Höhe der Schürze 18 ermitteln, die in Fig. 13a und 13b jeweils als weiße Gerade abgebildet ist. Die Nockenschräge LS kann dann für jeden Nocken 80 rechnerisch aus den gemessenen Nockenhöhen LH am Anfang und am Ende des jeweiligen Nockens 80 ermittelt werden.

An der Messstelle 5 werden Twist-Off-Verschlussdeckel 12 mit nach oben weisender Schürze 18 um die vertikal ausgerichtete Mittelachse 48 des Greifers gedreht, um die Nockenbreite LW, den Nockeninnendurchmesser LC und den Anrollinnendurchmesser CC zu ermitteln, wie in Fig. 14 dargestellt. Bei dem oberhalb vom Verschlussdeckel 12 ortsfest im Gehäuse 28 montierten dritten weiteren Sensor 76 ist die Lichtquelle eine Punktlichtquelle 84, die am abgebogenen unteren Ende eines länglichen Halters 86 angeordnet und nach oben zu der Kamera 88 hin gerichtet ist, die als Bilderfassungseinheit dient. Bei der Vermessung des Verschlussdeckels 12 wird die Punktlichtquelle 84 unterhalb vom angerollten Rand der Schürze 18 positioniert, bevor von der Kamera 88 sukzessive um den Umfang des Verschlussdeckels 12 herum Schattenbilder des angerollten Randes aufgenommen und anschließend vom Rechner der Vorrichtung 10 in Umfangsrichtung des Deckels 12 aneinander gereiht bzw. einander überlagert werden. Dem dabei erzeugten Schattenbild der Unterseite des Deckels 12 wird weiter das an der Messstelle 2 erzeugte Schattenbild überlagert, wobei die beiden Schattenbilder in Bezug zueinander zentriert werden. Aus diesem überlagerten Schattenbild kann der Rechner der Vorrichtung 10 die Nockenbreite LW, den Nockeninnendurchmesser LC und den Anrollinnendurchmesser CC durch Bildauswertung mittels einer geeigneten Software rechnerisch mit hoher Genauigkeit ermitteln.

An der Messstelle 6 werden der Kronenaußendurchmesser C1 und der Curlaußendurchmesser C2 von Press-On-Twist-Off-Deckeln 14 ermittelt. Der an der Messstelle 5 angeordnete vierte weitere Sensor (nicht dargestellt) umfasst dazu ebenfalls eine Lichtquelle und eine Kamera oder Bildverarbeitungseinheit, die ein seitliches Schattenbild des Verschlussdeckels 14 aufnimmt. Dieses Schattenbild wird dann vom Rechner der Vorrichtung 10 ausgewertet, um den Kronenaußendurchmesser C1 und den Curlaußendurchmesser C2 durch rechnerische Bildauswertung zu ermitteln.

Die bei der Vermessung eines Verschlussdeckels 12, 14 ermittelten Ist-Parameter, wie OD, OV, LH, RP, CD, CP, CPA, CPB, CC, LH, LW, LS, LC, C1 und/oder C2 werden vom Rechner (nicht dargestellt) der Vorrichtung 10 mit entsprechenden, vor der Vermessung in einem Speicher des Rechners gespeicherten Soll-Parametern verglichen. Das Ergebnis des Vergleichs wird auf einer Anzeige des Rechners angezeigt. Wenn sämtliche eventuellen Abweichungen zwischen den Ist-Parametern und den Soll-Parametern innerhalb eines zuvor festgelegten Toleranzbereichs liegen, wird der Verschlussdeckel 12, 14 in den Produktionsprozess zurückgeführt. Dazu wird der Greifer 38 des Roboters 34 über eine erste Abführrutsche 90 bewegt und anschließend der Elektromagnet deaktiviert, um den Verschlussdeckel 12, 14 in die erste Abführrutsche 90 abzuwerfen.

Wenn hingegen eine eventuelle Abweichung zwischen einem der Ist-Parameter und dem zugehörigen Soll-Parameter außerhalb eines zuvor dafür festgelegten Toleranzbereichs liegt, wird der Verschlussdeckel 12, 14 entsorgt. Dazu wird der Greifer 38 des über eine zweite Abführrutsche 92 bewegt und anschließend der Elektromagnet deaktiviert, um den Verschlussdeckel 12, 14 in die zweite Abführrutsche 92 abzuwerfen.

Die beiden Abführrutschen 90, 92 führen aus dem Gehäuse 28 heraus zu einem jeweiligen Auffangbehälter 94, 96 oder Förderer, von wo aus sie dem Produktionsprozess oder der Entsorgung zugeführt werden.

Um die Transportwege der Verschlussdeckel 12, 14 aus dem Produktionsprozess zur Vorrichtung 10 und zurück zu minimieren, wird eine Positionierung der Vorrichtung 10 in der Nähe der Produktionsanlagen bevorzugt. Um zu verhindern, dass die dort herrschenden Umgebungsbedingungen, insbesondere Vibrationen und hohe Temperaturen, zum Auftreten fehlerhafter Messergebnisse führen, umfasst die Vorrichtung 10 eine Klimaanlage (nicht dargestellt), die das Gehäuseinnere klimatisiert und dort für eine gleichbleibende Temperatur und Luftfeuchtigkeit sorgt. Wie am besten in Fig. 5 dargestellt, ist das Gehäuse 28 zudem auf aktiven Schwingungsdämpfern 98 schwingungsfrei gelagert.

## Patentansprüche

1. **Verwendung einer Vorrichtung zur optischen Vermessung** eines Verschlussdeckels (12, 14), die Vorrichtung mit
- einem Roboter (34), der einen beweglichen Greifer (38) zum Aufnehmen des Verschlussdeckels (12, 14) aufweist;
- einem ersten, ortsfesten optischen Sensor (64) zur Ermittlung oder Erfassung von mindestens einem ersten Parameter (OD, OV) des Verschlussdeckels (12,14);
- mindestens einem weiteren ortsfesten optischen Sensor (72, 74, 76) zur Ermittlung oder Erfassung von mindestens einem weiteren Parameter (CP, CPA, CPB, CC, LH, LW, LS, LC, C1, C2) des Verschlussdeckels (12,14), - und einer Rutsche (32) zum Zuführen eines zu vermessenden Verschlussdeckels (12) zum Greifer (38) des Roboters;
- wobei der Roboter (34) so konfiguriert ist,
-- den vom Greifer (38) aufgenommenen Verschlussdeckel (12, 14) zur Erfassung oder Ermittlung des ersten Parameters (OD) auf einer Ablagefläche (62) in einem Erfassungsbereich des ersten ortsfesten optischen Sensors (64) abzulegen;
-- den vom Greifer aufgenommenen Verschlussdeckel (12, 14) zur Ermittlung oder Erfassung des mindestens einen weiteren Parameters (CP, CPA, CPB, CC, LH, LW, LS, LC, C1, C2) innerhalb eines Erfassungsbereichs des mindestens einen weiteren ortsfesten optischen Sensors (72, 74, 76) zu bewegen.

2. Verwendung nach Anspruch 1, wobei der Verschlussdeckel (12, 14) ein Nockenverschluss-Deckel (Twist-Off-Typ) oder ein Press-On-Twist-Off-Verschlussdeckel (PT-Typ) ist, bevorzugt zum Verschließen eines mit Nahrung zu füllenden oder gefüllten Behälter aus bevorzugt Glas.

3. Verwendung nach Anspruch 1 oder 2, wobei der erste ortsfeste optische Sensor (64) den mindestens einen ersten Parameter (OD) in einem ersten Koordinatensystem erfasst, das auf die Ablagefläche (62) bezogen ist; und der weitere ortsfeste optische Sensor (72, 74, 76) den mindestens einen weiteren Parameter (CP, CPA, CPB, CC, LH, LW, LS, LC, C1, C2) in einem zweiten Koordinatensystem erfasst, das auf den Roboter (34) bezogenen ist.

4. Verwendung nach einem der vorigen Ansprüche, mit einem vom Roboter (34) bewegbaren optischen Sensor (52), insbesondere einem Laser-Triangulationssensor, zur Erfassung oder Ermittlung zumindest eines Parameters (LH, RP, CD) an einer dem Greifer (38) zugewandten und/oder von der Ablagefläche (62) abgewandten Seite des Verschlussdeckels (12,14).

5. Verwendung nach einem der vorigen Ansprüche, wobei der weitere ortsfeste optische Sensor (72, 74, 76) ausgebildet ist, zumindest einen Parameter (CP, CPA, CPB, CC, LH, LW, LS, LC, C1, C2) an einer vom Greifer (38) abgewandten Seite des Verschlussdeckels (12, 14) zu erfassen.

6. Verwendung nach einem der vorigen Ansprüche, wobei die Ablagefläche (62) transparent ist.

7. Verwendung nach einem der vorigen Ansprüche, wobei der weitere ortsfeste, optische Sensor (72, 74, 76) einen Laser-Triangulationssensor (72) umfasst.

8. Verwendung nach einem der vorigen Ansprüche, wobei der weitere ortsfeste optische Sensor (72, 74, 76) einen Laserprojektor (78) und eine Bilderfassungseinrichtung (82) umfasst, wobei die Bilderfassungseinrichtung (82) ausgebildet ist, einen vom Laserprojektor (78) auf den Verschlussdeckel (12, 14) gerichteten und vom Verschlussdeckel (12, 14) zur Bilderfassungseinrichtung (82) reflektierten Laserstrahlenfächer (81, 83) zu erfassen.

9. Verwendung nach einem der vorigen Ansprüche, wobei der weitere ortsfeste optische Sensor (72, 74, 76) eine Lichtquelle (84) und eine Bilderfassungseinrichtung (88) umfasst, um von der Bilderfassungseinrichtung (88) ein Schattenbild eines die Lichtquelle (84) verdeckenden Abschnitts des Verschlussdeckels (12) erfassen zu lassen.

10. Verwendung nach einem der vorigen Ansprüche, wobei der Roboter (34), der erste ortsfeste optische Sensor (64), der weitere ortsfeste optische Sensor (72, 84, 76) sowie die Ablagefläche (62) im Inneren eines geschlossenen Gehäuses (28) untergebracht sind, insbesondere mit einer Klimaeinrichtung zur Klimatisierung eines Inneren des geschlossenen Gehäuses (28) und/oder wobei das Gehäuse (28) von aktiven Schwingungsdämpfern (98) abgestützt ist.

11. Verwendung nach Anspruch 1 oder 2, wobei der erste Parameter einem Anroll-Außendurchmesser (OD) und/oder einer Ovalität (OV) des Verschlussdeckels (12, 14) entspricht.

12. Verwendung nach Anspruch 1, 2 oder 11, wobei der zweite Parameter einer Stärke oder Dicke (CP, CPA, CPB) eines Dichtungsmaterials (Compound) an einer Innenseite des Verschlussdeckels (12, 14), einem Anroll-Innendurchmesser (CC), einer Höhe (LH), einer Breite (LW), einer Neigung (LS) oder einem Innendurchmesser (LC) eines Nockens (80) entlang eines unteren Randes des Verschlussdeckels (12, 14) entspricht.

13. Verwendung nach Anspruch 1 oder Anspruch 6, wobei der erste ortsfeste optische Sensor (64) eine auf einer Seite der Ablagefläche (62) angeordnete Lichtquelle (66), eine zwischen der Lichtquelle (66) und der Ablagefläche (62) angeordnete telezentrische Optik (68) aufweist.

14. Verwendung nach Anspruch 1, 6 oder Anspruch 13, wobei auf der entgegengesetzten Seite der Ablagefläche (62) eine Bilderfassungseinrichtung (70) angeordnet ist.

15. Verwendung nach einem der vorigen Ansprüche, wobei eine Rutsche (32) vorgesehen ist, auf der ein zu vermessender Verschlussdeckel (12) dem Greifer (38) des Roboterarms zuführbar ist.

## Claims

1. Use of a device for the optical measurement of a closure cap (12, 14), the device having
- a robot (34) having a moveable gripper (38) for picking up the closure cap (12, 14)
- a first, stationary optical sensor (64) for determining or detecting at least a first parameter (OD, OV) of the closure cap (12, 14);
- at least a further stationary optical sensor (72, 74, 76) for determining or detecting at least a further parameter (CP, CPA, CPB, CC, LH, LW, LS, LC, C1, C2) of the closure cap (12, 14),
- and a chute (32) for feeding a closure cap (12) to be measured to the gripper (38) of the robot;
- wherein the robot (34) is configured
- to deposit the closure cap (12, 14), received by the gripper (38), on a depositing surface (62) for detecting or determining the first parameter (OD) in a detection area of the first stationary optical sensor (64);
- moving the closure cap (12, 14), received by the gripper, within a detection range of the at least one further stationary optical sensor (72, 74, 76) to determine or detect the at least one further parameter (CP, CPA, CPB, CC, LH, LW, LS, LC, C1, C2).

2. Use according to claim 1, wherein the closure cap (12, 14) is a twist-off type or a press-on twist-off type closure cap (PT type), preferably for closing a container of preferably glass to be filled or filled with food.

3. Use according to claim 1 or 2, wherein the first stationary optical sensor (64) detects the at least one first parameter (OD) in a first coordinate system which is related to the placement surface (62); and the further stationary optical sensor (72, 74, 76) detects the at least one further parameter (CP, CPA, CPB, CC, LH, LW, LS, LC, C1, C2) in a second coordinate system which is related to the robot (34).

4. Use according to one of the previous claims, with an optical sensor (52), in particular a laser triangulation sensor, movable by the robot (34), for detecting or determining at least one parameter (LH, RP, CD) on a side of the closure cap (12, 14) facing the gripper (38) and/or remote from the deposit surface (62).

5. Use according to one of the previous claims, wherein the further stationary optical sensor (72, 74, 76) is designed to detect at least one parameter (CP, CPA, CPB, CC, LH, LW, LS, LC, C1, C2) on a side of the closure cap (12, 14) facing away from the gripper (38).

6. Use according to any of the foregoing claims, wherein the storage surface (62) is transparent.

7. Use according to any of the foregoing claims, wherein the further stationary optical sensor (72, 74, 76) comprises a laser triangulation sensor (72).

8. Use according to any of the foregoing claims, wherein the further stationary optical sensor (72, 74, 76) comprises a laser projector (78) and an image detection device (82), wherein the image detection device (82) is adapted to detect a laser beam fan (81, 83) directed by the laser projector (78) onto the closure cap (12, 14) and reflected from the closure cap (12, 14) to the image detection device (82).

9. Use according to any of the foregoing claims, wherein the further stationary optical sensor (72, 74, 76) comprises a light source (84) and an image sensing means (88) for having the image sensing means (88) sense a shadow image of a portion of the closure cap (12) concealing the light source (84).

10. Use according to one of the previous claims, wherein the robot (34), the first stationary optical sensor (64), the further stationary optical sensor (72, 84, 76) as well as the storage surface (62) are accommodated in the interior of a closed housing (28), in particular with an air-conditioning device for air-conditioning an interior of the closed housing (28) and/or wherein the housing (28) is supported by active vibration dampers (98).

11. Use according to claim 1 or 2, wherein the first parameter corresponds to a roll-on outer diameter (OD) and/or an ovality (OV) of the closure cap (12, 14).

12. Use according to claim 1, 2 or 11, wherein the second parameter corresponds to a thickness or thickness (CP, CPA, CPB) of a sealing material (compound) on an inner side of the closure cap (12, 14), a roll-on inner diameter (CC), a height (LH), a width (LW), a slope (LS) or an inner diameter (LC) of a cam (80) along a lower edge of the closure cap (12, 14).

13. Use according to claim 1 or claim 6, wherein the first stationary optical sensor (64) comprises a light source (66) disposed on one side of the support surface (62), telecentric optics (68) disposed between the light source (66) and the support surface (62).

14. Use according to claim 1, 6 or claim 13, wherein an image capturing device (70) is disposed on the opposite side of the storage surface (62).

15. Use according to one of the previous claims, wherein a chute (32) is provided, on which a closure cap (12) to be measured can be fed to the gripper (38) of the robot arm.

## Revendications

1. **Utilisation** d'un dispositif pour la mesure optique d'un bouchon de fermeture (12, 14), le dispositif ayant
- un robot (34) ayant une pince mobile (38) pour saisir le bouchon de fermeture (12, 14)
- un premier capteur optique fixe (64) pour déterminer ou détecter au moins un premier paramètre (DO, VO) du bouchon de fermeture (12,14);
- au moins un autre capteur optique fixe (72, 74, 76) pour déterminer ou détecter au moins un autre paramètre (CP, CPA, CPB, CC, LH, LW, LS, LC, C1, C2) du bouchon de fermeture (12, 14),
- et une goulotte (32) pour l'alimentation d'un bouchon de fermeture (12) à mesurer sur la pince (38) du robot;
- dans lequel le robot (34) est configuré
-- pour déposer la capsule de fermeture (12, 14) reçue par la pince (38) pour détecter ou déterminer le premier paramètre (OD) sur une surface de dépôt (62) dans une zone de détection du premier capteur optique fixe (64);
-- déplacer le bouchon de fermeture (12, 14) reçu par la pince pour déterminer ou détecter le ou les autres paramètres (CP, CPA, CPB, CC, LH, LW, LS, LC, C1, C2) dans une plage de détection du ou des autres capteurs optiques fixes (72, 74, 76).

2. Utilisation selon la revendication 1, dans laquelle le couvercle de fermeture (12, 14) est un couvercle de fermeture du type à dévissage ou un couvercle de fermeture du type à dévissage à pression, de préférence pour fermer un récipient de préférence en verre à remplir ou rempli de nourriture.

3. Utilisation selon la revendication 1 ou 2, dans laquelle le premier capteur optique fixe (64) détecte le au moins un premier paramètre (OD) dans un premier système de coordonnées qui est lié à la surface de placement (62) ; et l'autre capteur optique fixe (72, 74, 76) détecte le au moins un autre paramètre (CP, CPA, CPB, CC, LH, LW, LS, LC, C1, C2) dans un deuxième système de coordonnées qui est lié au robot (34).

4. Utilisation selon l'une des revendications précédentes, avec un capteur optique (52), en particulier un capteur à triangulation laser, déplacé par le robot (34), pour détecter ou déterminer au moins un paramètre (LH, RP, CD) sur un côté du couvercle de fermeture (12, 14) tourné vers la pince (38) et/ou éloigné de la surface de dépôt (62).

5. Utilisation selon l'une des revendications précédentes, dans laquelle l'autre capteur optique fixe (72, 74, 76) est conçu pour détecter au moins un paramètre (CP, CPA, CPB, CC, LH, LW, LS, LC, C1, C2) sur un côté du couvercle de fermeture (12, 14) opposé à la pince (38).

6. Utilisation selon l'une des revendications précédentes, dans laquelle la surface de stockage (62) est transparente.

7. Utilisation selon l'une des revendications précédentes, dans laquelle l'autre capteur optique stationnaire (72, 74, 76) comprend un capteur à triangulation laser (72).

8. Utilisation selon l'une des revendications précédentes, l'autre capteur optique fixe (72, 74, 76) comprenant un projecteur laser (78) et un dispositif de détection d'image (82), le dispositif de détection d'image (82) étant conçu pour détecter un éventail de rayons laser (81, 83) dirigé par le projecteur laser (78) sur l'obturateur (12,14) et réfléchi par l'obturateur (12, 14) vers le dispositif de détection d'image (82).

9. Utilisation selon l'une des revendications précédentes, dans laquelle l'autre capteur optique fixe (72, 74, 76) comprend une source de lumière (84) et un dispositif de détection d'image (88) pour que le dispositif de détection d'image (88) détecte une image d'ombre d'une partie du bouchon de fermeture (12) obscurcissant la source de lumière (84).

10. Utilisation selon l'une des revendications précédentes, dans laquelle le robot (34), le premier capteur optique fixe (64), l'autre capteur optique fixe (72, 84, 76) ainsi que la surface de stockage (62) sont logés à l'intérieur d'un boîtier fermé (28), en particulier avec un dispositif de climatisation pour climatiser un intérieur du boîtier fermé (28) et/ou dans laquelle le boîtier (28) est soutenu par des amortisseurs de vibrations actifs (98).

11. Utilisation selon la revendication 1 ou 2, dans laquelle le premier paramètre correspond à un diamètre extérieur (OD) et/ou une ovalité (OV) du bouchon de fermeture (12, 14).

12. Utilisation selon la revendication 1, 2 ou 11, dans laquelle le deuxième paramètre correspond à une épaisseur ou à une épaisseur (CP, CPA, CPB) d'un matériau d'étanchéité (composé) sur un côté intérieur du capuchon de fermeture (12, 14), un diamètre intérieur de roulement (CC), une hauteur (LH), une largeur (LW), une pente (LS) ou un diamètre intérieur (LC) d'une came (80) le long d'un bord inférieur du capuchon de fermeture (12, 14).

13. Utilisation selon la revendication 1 ou la revendication 6, dans laquelle le premier capteur optique stationnaire (64) comprend une source de lumière (66) disposée sur un côté de la surface de support (62), une optique télécentrique (68) disposée entre la source de lumière (66) et la surface de support (62).

14. Utilisation selon la revendication 1, 6 ou la revendication 13, dans laquelle un dispositif de capture d'image (70) est disposé sur le côté opposé de la surface de stockage (62).

15. Utilisation selon l'une des revendications précédentes, dans laquelle une goulotte (32) est prévue, sur laquelle un couvercle de fermeture (12) à mesurer peut être amené à la pince (38) du bras du robot.
